# EUROPÄISCHE PATENTANMELDUNG

(11) **EP 3 987 937 A1**
(43) Veröffentlichungstag der Anmeldung: **27.04.2022**
(21) Anmeldenummer: 20202848.6
(22) Anmeldetag: 20.10.2020
(51) Int. Cl.: A21D 13/00, A23G 3/48, A23L 19/18, A23L 33/22

(54) **VERFAHREN ZUR HERSTELLUNG EINES FÜLLSTOFFS AUS SCHLEMPE, FÜLLSTOFF, VERWENDUNG EINES FÜLLSTOFFS UND LEBENSMITTEL**

(71) Anmelder: Bühler AG, 9240 Uzwil (CH)
(72) Erfinder: Petry, Carsten, 8400 Winterthur (CH); Olwal, Mary, 8408 Winterthur (CH)
(74) Vertreter: Hepp Wenger Ryffel AG

(57) **Zusammenfassung**

Offenbart ist ein Verfahren zur Herstellung eines Füllstoffs aus Schlempe zur Ergänzung in einem Lebensmittel, insbesondere zum Ersatz und zur Ergänzung von Zucker oder einem Zuckerersatzstoff. Die Schlempe wurde als Abprodukt bei der Herstellung von Bier und/oder von Bioethanol erhalten. Zuerst wird die Feuchtigkeit der Schlempe reduziert, dann die Schlempe zerkleinert und die getrocknete Schlempe mit einem Aroma und/oder einem geschmacksmodifizierenden Lebensmittelzusatzstoffgemischt.

## Beschreibung

Die Erfindung betrifft ein Verfahren zur Herstellung eines Füllstoffs aus Schlempe, einen durch dieses Verfahren erhaltenen oder erhältlichen Füllstoff, eine Verwendung eines solchen Füllstoffs und ein Lebensmittel mit mindestens einem solchen Füllstoff.

Zum Süssen vieler verschiedener Lebensmittel werden Zucker und/oder Zuckerersatzstoffe eingesetzt.

Als Zucker werden im Sinne der vorliegenden Anmeldung die Erzeugnisse verstanden, die im Anhang A der Richtlinie 2001/111/EG des Rates der Europäischen Union vom 20. Dezember 2001 über bestimmte Zuckerarten für die menschliche Ernährung genannt sind, also beispielsweise Saccharose, Invertzucker, Glukose, Dextrose und Fruktose.

Als "Zuckerersatzstoffe" werden im Rahmen der vorliegenden Erfindung unter anderem die Stoffe verstanden, die in der Anlage 2 zur deutschen Verordnung über die Zulassung von Zusatzstoffen zu Lebensmitteln zu technologischen Zwecken (Zusatzstoff-Zulassungsverordnung vom 29. Januar 1998 (BGBl. I S. 230, 231), die zuletzt durch Artikel 3 der Verordnung vom 21. Mai 2012 (BGBl. I S. 1201) geändert worden ist) aufgeführt sind (unabhängig von den dort konkret genannten Lebensmitteln). Der Begriff "Zuckerersatzstoff" umfasst also die z. B. im Teil A der genannten Anlage aufgeführten Zuckeraustauschstoffe (Sorbit (E 420), Mannit (E 421), Isomalt (E 953), Maltit (E 965), Lactit (E 967), Xylit (E 967), Inulin, Polydextrose (E 1200) und Dextrin bzw. Maltodextrin) und z. B. die im Teil B der genannten Anlage aufgeführten Süssstoffe (Acesulfam K (E 950), Aspartam (E 951), Cyclohexansulfamidsäure (E 952) und ihre Na- und Ca-Salze, Saccharin (E 954) und seine Na-Salze, K-Salze und Ca-Salze, Sucralose (E 955), Thaumatin (E 957), Neohesperidin (E 959), Neotam (E 961) und Aspartam und Acesulfamsalze (E 962)). Weiterhin umfasst der Begriff "Zuckerersatzstoff" auch den Zuckeraustauschstoff Erythrit (E 968) und die Süssstoffe Advantam (E 969), Steviosidglycoside (E 960), Polyglycitolsirup (E 964) und Lactitol (E 966). Die Begriffe "Zuckeraustauschstoff" und "Süssstoff" sind nachfolgend ebenfalls in diesem Sinne zu verstehen.

Insbesondere künstliche Süssstoffe sind sehr effizient. Im Vergleich zu Zucker nehmen sie aber aufgrund ihrer signifikant stärkeren Süsskraft und somit deutlich geringeren Dosierung in einem Lebensmittel bei gleicher Wirkung oftmals nur einen vergleichsweise geringen Teil des Volumens ein. Damit fehlt bei Lebensmitteln, in denen Zucker zumindest teilweise oder vollständig durch einen Zuckerersatzstoff ersetzt ist, ein erheblicher Teil an Volumen. Dieses Problem kann auch auftreten, wenn in einem Lebensmittel kein Zuckerersatzstoff verwendet wird, sondern nur der Zuckergehalt reduziert wird.

Es ist daher eine Aufgabe der vorliegenden Erfindung, den aus dem Stand der Technik bekannten Nachteilen entgegenzuwirken, insbesondere dem oben beschriebenen Nachteil des geringen Volumens, der bei der Verwendung eines oder mehrerer Zuckerersatzstoffe und/oder der Reduktion des Zuckergehalts entsteht.

Diese Aufgaben werden zumindest teilweise durch die Merkmale der unabhängigen Ansprüche gelöst. Weitere vorteilhafte Ausführungen ergeben sich aus Kombinationen mit den Merkmalen der entsprechenden Unteransprüche sowie aus den Ausführungen in der Beschreibung und den Figuren.

Ein erster Aspekt der Erfindung betrifft ein Verfahren zur Herstellung eines Füllstoffs aus Schlempe. Als Schlempe werden im Rahmen der vorliegenden Erfindung die Rückstände einer Gärflüssigkeit von Kohlenhydraten verstanden, die nach dem Abdestillieren des Alkohols zurückbleiben. Schlempe enthält in der Regel Proteine, Fette, Fasern und auch Mineralstoffe. Sie entsteht unter anderem als Abprodukt, das bei der Herstellung von Bier und/oder von Bioethanol auf Basis von stärkehaltigen Getreiden erhalten wird. Getrocknete Schlempe von Getreidemaischen wird auch als Trockenschlempe oder DDGS ("Dried Distillers Grains with Solubles") genannt. Schlempe hat einen hohen Proteingehalt von teilweise bis zu 30 %. Schlempe aus der Bierproduktion (Biertreber) hat ausserdem einen hohen Fasergehalt von 45 % bis 50 %.

Das erfindungsgemässe Verfahren enthält die folgenden Schritte, die bevorzugt, aber nicht zwingend in dieser Reihenfolge durchgeführt werden:
a) Reduzieren der Feuchtigkeit der Schlempe,
b) Zerkleinern der Schlempe,
c) Mischen der insbesondere getrockneten Schlempe mit mindestens einem Aroma und/oder mit mindestens einem geschmacksmodifizierenden Lebensmittelzusatzstoff.

Die Reduktion der Feuchtigkeit der Schlempe im Schritt a) dient der finalen Stabilisierung, um ein lagerfähiges Produkt zu erhalten. Das Zerkleinern der Schlempe in Schritt b) ist notwendig für die weitere Verarbeitung sowie die sensorischen Eigenschaften im Endprodukt.

Im Schritt c) kann durch die Zugabe von Aromen und/oder von geschmacksmodifizierenden Lebensmittelzusatzstoffen wie Süssstoffen die sensorische Qualität, welche durch eine Zuckerreduktion beeinträchtigt wird, kompensiert werden. Das Mischen (Schritt c)) kann in einem Mischer erfolgen, zum Beispiel in einem sogenannten Chargenmischer.

In der Praxis hat sich zur Gewinnung des Füllstoffs gezeigt, dass das Verfahren bevorzugt in der Reihenfolge der Schritte a), b) und c) ausgeführt wird.

Das erfindungsgemässe Verfahren erlaubt eine weitere, wirtschaftliche Verwendung der Schlempe neben der Verwendung als Viehfutter.

Vorzugsweise wird nach dem Reduzieren der Feuchtigkeit der Schlempe im Schritt a) die Schlempe mit einer Lufttemperatur getrocknet, die im Bereich von 100 °C bis 190 °C, bevorzugt im Bereich von 120 °C bis 170 °C liegt. Diese Lufttemperatur wird bevorzugt für eine Zeit von 2 Minuten bis 120 Minuten, bevorzugt für eine Zeit von 10 Minuten bis 30 Minuten, gehalten. Durch das Trocknen der Schlempe kann der Verderblichkeit der Schlempe entgegengewirkt werden.

Alternativ oder ergänzend wird vor oder nach dem Reduzieren der Feuchtigkeit der Schlempe im Schritt a) die Schlempe auf eine Temperatur erhitzt, die im Bereich von 70° C bis 130° C, bevorzugt im Bereich von 80 °C bis 121 °C liegt. Diese Temperatur wird bevorzugt für eine Zeit von 2 Minuten bis 120 Minuten gehalten. Durch das Erhitzen der Schlempe kann der Verderblichkeit der Schlempe entgegengewirkt werden.

Optional kann der Erhitzungsschritt auch mindestens zwei Erhitzungsstufen enthalten, wobei vorteilhaft eine Abkühlphase zwischen zwei Erhitzungsstufen erfolgt, welche zu einer Auskeimung der im Produkt enthaltenen Sporen führt. Durch die nachfolgende zweite Erhitzungsstufe können diese ausgekeimten Sporen inaktiviert werden.

Das Zerkleinern der Schlempe im Schritt b) kann ein Vermahlen enthalten, wobei dieses Zerkleinern der Schlempe vorzugsweise mittels eines Trockenvermahlens erfolgt. Das Zerkleinern der Schlempe (Schritt b)) wird vorteilhaft nach der Reduzierung der Feuchtigkeit der Schlempe (Schritt a)) ausgeführt, womit sich gute Vermahlungsergebnisse erreichen lassen.

Das Vermahlen erfolgt beispielsweise mit Hilfe einer Turbomühle. Unter einer Turbomühle (Turbo Mill) wird in diesem Zusammenhang eine Mühle verstanden, bei der die Rohstoffe durch die Kraft des Schneidens, des Aufpralls, unzähliger Hochgeschwindigkeitswirbel und Hochfrequenzvibrationen vermahlen werden. Derartige Turbomühlen werden z. B. von der Firma Lico S.p.A., Arcisate (VA), Italien, angeboten.

Alternativ erfolgt das Vermahlen beispielsweise mit Hilfe einer Luftklassifizierungsmühle. Unter einer Luftklassifizierungsmühle (Air Classifying Mill) wird eine luftgepeitschte mechanische Schlagmühle mit einem dynamischen Luftklassierer verstanden. Derartige Luftklassifizierungsmühlen werden z. B. von der Firma Hosokawa Micron Powder Systems, Summit, New Jersey, USA, angeboten.

Vorzugsweise liegen die Partikelgrössen der Schlempe nach dem Zerkleinern im Schritt b), insbesondere nach dem Vermahlen, zwischen 10 µm und 100 µm. Bevorzugt weist die Schlempe dann einen mittleren Partikeldurchmesser im Bereich von 25 µm bis 50 µm auf, wobei eine engere Partikelgrössenverteilung und ein möglichst geringer mittlerer Partikelgrössendurchmesser bevorzugt werden. Die Partikelgrössenverteilung kann beispielsweise mit Hilfe eines an sich bekannten Laserbeugungsverfahrens ermittelt werden.

Insbesondere das Vermahlen der Schlempe auf die vorgenannten Partikelgrössen und mittleren Partikeldurchmesser, insbesondere mit einer engeren Partikelgrössenverteilung und einem möglichst geringen mittleren Partikelgrössendurchmesser, verbessert die Sensorik des Füllstoffs massgeblich.

Zweckmässigerweise enthält das Reduzieren der Feuchtigkeit der Schlempe (Schritt a)) einen ersten Teilschritt a1), in dem die Feuchtigkeit der Schlempe mechanisch reduziert wird. Auf diese Weise können die Feuchtigkeit der Schlempe vergleichsweise schnell und einfach reduziert werden sowie die Kosten des thermischen Feuchtigkeitsentzugs minimiert werden. Zudem wird eine schnellere Stabilisierung des Produkts erreicht. Die mechanische Reduzierung der Feuchtigkeit kann beispielsweise durch ein Auspressen der Schlempe erreicht werden, etwa mit einer Band- oder einer Schneckenpresse. Die mechanische Reduzierung der Feuchtigkeit (Teilschritt a1)) wird vorteilhaft vor allen anderen Prozessschritten zur Reduktion der Feuchtigkeit durchgeführt.

Vorteilhafterweise liegt die Feuchtigkeit der Schlempe unmittelbar nach dem ersten Teilschritt a1) im Bereich von 50 Gew.-% bis 70 Gew.-%, bevorzugt im Bereich von 55 Gew.-% bis 65 Gew.-%, besonders bevorzugt im Bereich von 57 Gew.-% bis 63 Gew.-%.

Zur Erzielung der finalen Feuchte wird bevorzugt nach dem ersten Teilschritt a1) bzw. direkt ohne ersten Teilschritt a1) die Feuchtigkeit der Schlempe durch ein thermisches Verfahren reduziert (zweiter Teilschritt a2)), beispielsweise mit Hilfe einer Mahltrocknung (z. B. mit einem sogenannten "Flash-Dryer") oder einer Wirbelschichttrocknung, insbesondere mittels Fliessbetttrocknung. Im Falle einer Fliessbetttrocknung kann der Fliessbetttrockner sowohl als statischer als auch als vibrierender Fliessbetttrockner ausgeführt sein.

Alternativ wird die Feuchtigkeit der Schlempe mittels SHS-Trocknung thermisch reduziert. Unter einer SHS-Trocknung wird im vorliegenden Fall eine Trocknung mit überhitztem Dampf bei atmosphärischem Druck (engl.: superheated steam, SHS) verstanden.

Vorzugsweise liegt die Feuchtigkeit der Schlempe unmittelbar nach Schritt a), insbesondere nach dem zweiten Teilschritt a2), im Bereich von 4 Gew.-% bis 15 Gew.-%, bevorzugt im Bereich von 6 Gew.-% bis 12 Gew.-%, besonders bevorzugt im Bereich von 8 Gew.-% bis 10 Gew.-%. Eine Feuchtigkeit in diesem Bereich erlaubt eine Lagerung oder einen Transport der Schlempe in einem stabilen Zustand.

Wie bereits erläutert wurde, wird erfindungsgemäss Schlempe verwendet, die als Abprodukt bei der Herstellung von Bier und/oder von Bioethanol auf Basis von stärkehaltigen Getreiden erhalten wurde. Von besonderem Vorteil ist es, wenn die Schlempe vor Schritt a) unmittelbar aus der Bier- und/oder Bioethanol-Herstellung entnommen wurde und nicht beispielsweise zwischenzeitlich gelagert und/oder transportiert wurde. Hierdurch kann der Verderblichkeit der Schlempe entgegengewirkt werden.

Bevorzugt wird die Schlempe innerhalb von 3 Stunden, vorzugsweise innerhalb von 2 Stunden, verarbeitet, um jegliche Entstehung von Keimen oder Verderbsorganismen zu vermeiden.

Alternativ oder ergänzend die wird zur Stabilisierung der Schlempe diese nach dem Schritt a) entkeimt und/oder debakterisiert. Die Entkeimung und/oder die Debakterisierung erfolgt vorteilhaft vor dem Schritt b), so dass während des Zerkleinerns (während Schritt b)) keine Kontaminierung der Zerkleinerungsvorrichtung erfolgen kann.

Besonders vorteilhaft hat sich eine Entkeimung und/oder eine Debakterisierung erwiesen, die in einem Elektronenfeld erfolgt. Die mit dem Elektronenstrahl auf die Schlempe aufgebrachte Strahlendosis sollte derart hoch gewählt werden, dass eine ausreichende Entkeimung und/oder Debakterisierung der Schlempe sichergestellt ist. Gleichzeitig darf die aufgebrachte Strahlendosis jedoch nicht derart hoch sein, dass die Schlempe bei der Behandlung Schaden nimmt.

Ein weiterer Aspekt der Erfindung betrifft einen Füllstoff, der durch ein wie oben beschriebenes Verfahren erhalten wurde oder erhältlich ist. Insbesondere kann ein solcher Füllstoff zur Ergänzung oder zum Ersatz von Zucker und/oder mindestens einem Zuckerersatzstoff in einem Lebensmittel vorgesehen und ausgebildet sein. Dieser Füllstoff weist die bereits beschriebenen Vorzüge auf. Der Füllstoff kann beispielsweise in Form eines Pulvers oder einer Paste vorliegen. Der Füllstoff kann im Rahmen der Erfindung aber auch zu anderen Zwecken als zur Ergänzung oder zum Ersatz von Zucker und/oder mindestens einem Zuckerersatzstoff im Lebensmittel eingesetzt werden.

Weiterhin betrifft die Erfindung eine Verwendung des Füllstoffs zur Ergänzung in einem Lebensmittel, insbesondere zur Ergänzung oder zum Ersatz von Zucker und/oder mindestens einem Zuckerersatzstoff in einem Lebensmittel. Insbesondere kann der Füllstoff zur Ergänzung oder zum Ersatz eines Zuckeraustauschstoffs und/oder eines Süssstoffs verwendet werden. Die Vorteile einer solchen Verwendung wurden oben dargelegt.

In noch einem weiteren Aspekt betrifft die Erfindung ein Lebensmittel, welches mindestens einen erfindungsgemässen Füllstoff enthält. Auf diese Weise kann das Volumen in der Rezeptur des Lebensmittels aufgefüllt werden, das beispielsweise durch die Reduktion des Zuckergehalts und/oder das zumindest teilweise Ersetzen von Zucker durch einen Zuckerersatzstoff reduziert wurde. Dabei wird die Qualität des Lebensmittels durch das Hinzufügen des mit dem erfindungsgemässen Verfahren erhaltenen Füllstoffs nicht beeinträchtigt.

Durch die Verwendung des erfindungsgemässen Füllstoffes können Lebensmittel nährwerttechnisch aufgewertet werden, da die Schlempe über einen relativ hohen Eiweiss- und Faseranteil verfügt.

Als besonders vorteilhaft hat sich erwiesen, wenn das Lebensmittel einen Füllstoffanteil von maximal 20 Gew.-%, vorteilhaft von maximal 7 Gew.-%, enthält, womit eine geschmacklich angenehme Konsistenz des Lebensmittels gewährleistet werden kann.

Vorzugsweise enthält das Lebensmittel ausserdem Zucker und/oder mindestens einen Zuckerersatzstoff. Als mindestens einen Zuckerersatzstoff kann das Lebensmittel mindestens einen Zuckeraustauschstoff und/oder mindestens einen Süssstoff enthalten. Es hat sich überraschenderweise gezeigt, dass mit dem erfindungsgemässen Füllstoff aus Abbauprodukten, die bei der Herstellung von Bier und/oder von Bioethanol entstehen, samt Aromen sich Zucker 1:1 ersetzen lässt, und zwar im Umfang von bis zu 50 %, insbesondere von 30 % des gesamten Zuckergehalts. Ein solches Lebensmittel weist die bereits oben erwähnten Vorteile auf.

Die Dosierung des erfindungsgemässen Füllstoffes liegt beispielsweise zwischen 2 % und 10 %. Neben einer Zucker- und Kalorienreduktion führt die Verwendung des erfindungsgemässen Füllstoffes zu einer deutlichen Erhöhung des Faser- und Proteingehalts in verschiedenen Lebensmitteln.

Das Lebensmittel kann aus der Gruppe ausgewählt sein, die aus den folgenden Lebensmitteln besteht:
- Snacks, insbesondere extrudierte Snacks, Crackers, Nachos, Getreideriegeln und Snackbars, wobei die Snacks gepresst, frittiert und/oder getoastet sein können,
- Backwaren, insbesondere Brot, Burger Buns, Brötchen, Knäckebrot, Tortillas, Pizzateig, Gebäck und Waffeln, Kekse,
- Feinbackwaren, wie beispielsweise Kuchen, Brioche, Plunder, Hüppen,
- Frühstückscerealien,
- Fleischersatzprodukte,
- Saucen,
- Instant-Drinks,
- Teigwaren, Pasten, Brotaufstriche, Füllungen,
- Kakaoprodukten, Schokolade, Haselnusscreme.

Nachfolgend wird die Erfindung anhand eines Ausführungsbeispiels näher erläutert.

Bei der an sich bekannten Herstellung von Bier wurde Schlempe mit einer Feuchtigkeit von ca. 78 Gew.-% abgeschieden. Diese Schlempe wurde mechanisch und thermisch, durch Reduktion der Feuchtigkeit der Schlempe (in Schritt a)) auf ca. 10 Gew.-% Feuchtigkeit stabilisiert. Dieses Material wurde dann in einem Schritt b) mit einer Turbomühle oder Luftklassifizierungsmühle zerkleinert und mit Sieb gesiebt, woraufhin 99,8 Gew.-% der in der Schlempe enthaltenen Partikel eine Grösse von weniger als 100 µm hatten. In einem Schritt c) wurde das Material mit einem Aroma vermischt.

Dieses trockene Pulver wurde verwendet zur Herstellung von zuckerreduzierten Schlempe-Butterkeksen aus folgender Rezeptur: 250 g Butter, 125 g Zucker, 125 g getrocknete Schlempe (inklusive des Aromas), 250 g Weizenmehl, 100 g Eier, 50 g Wasser. Zunächst wurden Butter, Wasser und Zucker 2 Minuten lang vermischt. Anschliessend wurden die Eier hinzugefügt und 1 Minute lang gemischt. Nach Zugabe von Mehl und Schlempe wurde nochmals 1 Minute lang gemischt. Dies ergab insgesamt einen Teig von 900 g, der gekühlt, zu einer Dicke von 8 mm ausgerollt, zu Keksen ausgestochen und in einem Stikkenofen gebacken wurde.

## Patentansprüche

1. Verfahren zur Herstellung eines Füllstoffs aus Schlempe, insbesondere zur Ergänzung in einem Lebensmittel, insbesondere zur Ergänzung oder zum Ersatz von Zucker und/oder mindestens einem Zuckerersatzstoff in einem Lebensmittel, wobei die Schlempe als Abprodukt bei der Herstellung von Bier und/oder von Bioethanol auf Basis von stärkehaltigen Getreiden erhalten wurde und das Verfahren die folgenden Schritte enthält:
a) Reduzieren der Feuchtigkeit der Schlempe,
b) Zerkleinern der Schlempe,
c) Mischen der getrockneten Schlempe mit mindestens einem Aroma und/oder mit mindestens einem geschmacksmodifizierenden Lebensmittelzusatzstoff,
bevorzugt in der Reihenfolge a), b), c).

2. Verfahren gemäss Anspruch 1,
wobei nach dem Reduzieren der Feuchtigkeit der Schlempe im Schritt a) die Schlempe auf eine Lufttemperatur erhitzt wird, die im Bereich von 100 °C bis 190 °C, bevorzugt im Bereich von 120 °C bis 170 °C liegt, wobei vorteilhaft die Lufttemperatur für eine Zeit von 2 Minuten bis 120 Minuten, bevorzugt für eine Zeit von 10 Minuten bis 30 Minuten, gehalten wird.

3. Verfahren gemäss einem der vorangehenden Ansprüche, wobei das Zerkleinern der Schlempe im Schritt b) mittels eines Trockenvermahlens erfolgt, insbesondere mit Hilfe einer Turbomühle oder Luftklassifizierungsmühle, und der Schritt b) vorteilhaft nach Schritt a) ausgeführt wird.

4. Verfahren gemäss einem der vorangehenden Ansprüche, wobei die Partikelgrössen der Schlempe nach Schritt b) zwischen 10 µm und 100 µm liegen und bevorzugt einen mittleren Partikelgrössendurchmesser im Bereich von 25 µm bis 50 µm aufweisen.

5. Verfahren gemäss einem der vorangehenden Ansprüche, wobei das Reduzieren der Feuchtigkeit der Schlempe (Schritt a)) einen ersten Teilschritt a1) enthält, in dem die Feuchtigkeit der Schlempe mechanisch reduziert wird, insbesondere durch Auspressen der Schlempe, wobei der Teilschritt a1) vorteilhaft zuerst ausgeführt wird.

6. Verfahren gemäss Anspruch 5,
wobei die Feuchtigkeit die Schlempe unmittelbar nach dem ersten Teilschritt a1) im Bereich von 50 Gew.-% bis 70 Gew.-%, bevorzugt im Bereich von 55 Gew.-% bis 65 Gew.-%, besonders bevorzugt im Bereich von 57 Gew.-% bis 63 Gew.-% liegt.

7. Verfahren gemäss einem der vorangehenden Ansprüche, wobei Schritt a) einen, insbesondere nach dem ersten Teilschritt a1) durchgeführten, zweiten Teilschritt a2) enthält, in dem die Feuchtigkeit der Schlempe thermisch reduziert wird, beispielsweise mittels Wirbelschichttrocknung, insbesondere mittels Fliessbetttrocknung, oder SHS-Trocknung.

8. Verfahren gemäss einem der vorangehenden Ansprüche, wobei die Feuchtigkeit der Schlempe unmittelbar nach Schritt a), insbesondere nach dem zweiten Teilschritt a2), im Bereich von 4 Gew.-% bis 15 Gew.-%, bevorzugt im Bereich von 6 Gew.-% bis 12 Gew.-%, besonders bevorzugt im Bereich von 8 Gew.-% bis 10 Gew.-% liegt.

9. Verfahren gemäss einem der vorangehenden Ansprüche,
wobei die Schlempe innerhalb von 3 Stunden, vorzugsweise innerhalb von 2 Stunden, verarbeitet wird und/oder die Schlempe nach dem Schritt a) entkeimt und/oder debakterisiert wird, wobei
die Entkeimung und/oder die Debakterisierung vorteilhaft vor dem Schritt b) erfolgt, wobei
vorteilhaft die Entkeimung und/oder die Debakterisierung in einem Elektronenfeld erfolgt.

10. Füllstoff, insbesondere zur Ergänzung in einem Lebensmittel, insbesondere zur Ergänzung oder zum Ersatz von Zucker und/oder mindestens einem Zuckerersatzstoff in einem Lebensmittel, erhalten oder erhältlich durch ein Verfahren gemäss einem der vorangehenden Ansprüche.

11. Verwendung eines durch ein Verfahren gemäss einem der Ansprüche 1 bis 9 erhaltenen oder erhältlichen Füllstoffs zur Ergänzung in einem Lebensmittel, insbesondere zur Ergänzung oder zum Ersatz von Zucker und/oder mindestens einem Zuckerersatzstoff, insbesondere zur Ergänzung oder zum Ersatz eines Zuckeraustauschstoffes und/oder eines Süssstoffes, in einem Lebensmittel.

12. Lebensmittel, enthaltend mindestens einen durch ein Verfahren gemäss einem der Ansprüche 1 bis 9 erhaltenen oder erhältlichen Füllstoff.

13. Lebensmittel gemäss Anspruch 12, wobei das Lebensmittel einen Füllstoffanteil von maximal 20 Gew.-%, vorteilhaft von maximal 7 Gew.-% enthält.

14. Lebensmittel gemäss Anspruch 12 oder 13, wobei das Lebensmittel Zucker und/oder mindestens einen Zuckerersatzstoff, insbesondere mindestens einen Zuckeraustauschstoff und/oder mindestens einen Süssstoff, enthält.

15. Lebensmittel gemäss einem der Ansprüche 12 bis 14,
wobei das Lebensmittel aus der Gruppe ausgewählt ist, die besteht aus:
- Snacks, insbesondere extrudierte Snacks, Crackers, Nachos, Getreideriegeln und Snackbars, wobei die Snacks gepresst, frittiert und/oder getoastet sein können,
- Backwaren, insbesondere Brot, Burger Buns, Brötchen, Knäckebrot, Tortillas, Pizzateig, Gebäck und Waffeln, Kekse,
- Feinbackwaren, wie beispielsweise Kuchen, Brioche, Plunder, Hüppen,
- Frühstückscerealien,
- Fleischersatzprodukte,
- Saucen,
- Instant-Drinks,
- Teigwaren, Pasten, Brotaufstriche, Füllungen,
- Kakaoprodukten, Schokolade, Haselnusscreme.
